# EUROPEAN PATENT APPLICATION

(11) **EP 4 651 388 A1**
(43) Date of publication of application: **19.11.2025**
(21) Application number: 23920170.0
(22) Date of filing: 28.12.2023
(51) Int. Cl.: H04B 1/3822, H04W 4/40, H04W 4/90, H04B 1/04, H04B 17/10, H04B 17/309, B60R 21/00

(54) **ELECTRONIC DEVICE FOR VEHICLE, AND OPERATION METHOD THEREFOR**

(30) Priority: 31.01.2023 KR 20230013187
(71) Applicant: Samsung Electronics Co., Ltd., Suwon-si, Gyeonggi-do 16677 (KR)
(72) Inventor: JU, Seungbum, Suwon-si, Gyeonggi-do 16677 (KR); LEE, Kijeong, Suwon-si, Gyeonggi-do 16677 (KR); JANG, Changwon, Suwon-si, Gyeonggi-do 16677 (KR); JUN, Jaebum, Suwon-si, Gyeonggi-do 16677 (KR)
(74) Representative: Gulde & Partner
(86) International application number: PCT/KR2023/021853
(87) International publication number: WO 2024/162621

(57) **Abstract**

An electronic device for vehicles may obtain performance information of each of a plurality of RRH modules during normal driving of a vehicle, determine some RRH modules among the plurality of RRH modules, based on the performance information, when occurrence of an accident of the vehicle is detected, set a frequency band corresponding to the antennas included in the some RRH modules to a frequency band determined according to transmission performance information of the some RRH modules, to set a frequency band corresponding to the antennas included in remaining RRH modules among the plurality of RRH modules to a frequency band determined according to reception performance information of the remaining RRH modules, and control sending of an emergency call by using the some RRH modules.

## Description

### Technical Field

One or more embodiments relate to an electronic device for vehicles that is mounted on a vehicle and capable of performing communication with an external device, and an operation method of the electronic device.

### Background Art

Previously, vehicles used simpler communication technologies than mobile devices, because communication stability is important. However, as vehicle communication methods have become more advanced in recent years, multiple antennas have become necessary. Vehicles are larger than mobile devices and have more space than mobile devices to accommodate a larger number of antennas.

To efficiently install a large number of antennas in a vehicle, a Centralized/Cloud RAN (C-RAN) architecture used in existing networks can be utilized. In the C-RAN architecture, a digital unit (DU) and a radio unit (RU) already existing in a single cell site are separated from each other, so that DUs in each cell site are centralized and managed in one place and only RUs actually transmitting and receiving radio signals are left in the cell site. The C-RAN architecture has an advantage of minimizing costs that arise due to an increase in the number of cell sites.

By applying this C-RAN architecture to a vehicle's telematic control unit (TCU) and a plurality of antennas, the vehicle's communication stability can be improved, and also costs due to installation of the plurality of antennas can be reduced.

### Disclosure of Invention

### Solution to Problem

An electronic device for vehicles according to an embodiment may include a communication processor and a plurality of remote radio head (RRH) modules connected to the communication processor.

Each of the plurality of RRH modules may include a plurality of antennas and antenna tuners for tuning the plurality of antennas.

The electronic device for vehicles according to an embodiment may include a memory storing one or more instructions, and at least one processor configured to execute the one or more instructions stored in the memory.

The at least one processor may be configured to execute the one or more instructions to obtain performance information of each of the plurality of RRH modules during normal driving of a vehicle,

The at least one processor may be configured to execute the one or more instructions to, when occurrence of an accident of the vehicle is detected, determine some RRH modules among the plurality of RRH modules, based on the performance information.

The at least one processor may be configured to execute the one or more instructions to control the antenna tuners to set a frequency band corresponding to the antennas included in the some RRH modules to a frequency band determined according to transmission performance information of the some RRH modules.

The at least one processor may be configured to execute the one or more instructions to control the antenna tuners to set a frequency band corresponding to the antennas included in the remaining RRH modules to a frequency band determined according to reception performance information of the remaining RRH modules.

The at least one processor may be configured to execute the one or more instructions to control the communication processor to send an emergency call by using the some RRH modules.

An operation method of an electronic device for vehicles according to an embodiment may include obtaining performance information of each of the plurality of RRH modules during normal driving of a vehicle.

The operation method of an electronic device for vehicles according to an embodiment may include, when occurrence of an accident of the vehicle is detected, determining some RRH modules among the plurality of RRH modules, based on the performance information.

The operation method of an electronic device for vehicles according to an embodiment may include setting a frequency band corresponding to the antennas included in the some RRH modules to a frequency band determined according to transmission performance information of the some RRH modules.

The operation method of an electronic device for vehicles according to an embodiment may include setting a frequency band corresponding to the antennas included in the remaining RRH modules to a frequency band determined according to transmission performance information of the remaining RRH modules.

The operation method of an electronic device for vehicles according to an embodiment may include sending an emergency call by using the some RRH modules.

### Brief Description of Drawings

FIG. 1 is a view for explaining an operation method of an electronic device for vehicles, according to an embodiment.
FIG. 2 is a block diagram of a structure of an electronic device for vehicles, according to an embodiment.
FIG. 3 is a block diagram of a structure of a remote radio head (RRH) module according to an embodiment.
FIG. 4 is a block diagram of a structure of an antenna tuner according to an embodiment.
FIG. 5 is a flowchart of an operation method of an electronic device for vehicles, according to an embodiment.
FIG. 6 illustrates an example of performance information of a plurality of RRH modules according to an embodiment.
FIG. 7 is a table showing an example of priority information for a plurality of RRH modules according to an embodiment.
FIG. 8 is a flowchart of an operation method of an electronic device for vehicles, according to an embodiment.
FIG. 9 is a flowchart of an operation method of an electronic device for vehicles, according to an embodiment.
FIG. 10 is a table showing an example of priority information for a plurality of antennas included in one RRH module, according to an embodiment.
FIG. 11 is a diagram for explaining an operation performed using artificial intelligence technology, according to a disclosed embodiment.
FIG. 12 is a diagram illustrating an electronic device for vehicles, according to a disclosed embodiment, interoperating with a server.
FIG. 13 is a diagram for explaining FIG. 12 in greater detail.

### Mode for the Invention

Terms used herein will be described briefly, and the present disclosure will be described in detail.

Although general terms widely used at present were selected for describing the present disclosure in consideration of the functions thereof, these general terms may vary according to intentions of one of ordinary skill in the art, case precedents, the advent of new technologies, or the like. Terms arbitrarily selected by the applicant of the disclosure may also be used in a specific case. In this case, their meanings need to be given in the detailed description of the disclosure. Hence, the terms must be defined based on their meanings and the contents of the entire specification, not by simply stating the terms.

The terms "comprises" and/or "comprising" or "includes" and/or "including" when used in this specification, specify the presence of stated elements, but do not preclude the presence or addition of one or more other elements. The terms "unit", "-er (-or)", and "module" when used in this specification refers to a unit in which at least one function or operation is performed, and may be implemented as hardware, software, or a combination of hardware and software.

The present disclosure will now be described more fully with reference to the accompanying drawings, in which exemplary embodiments of the present disclosure are shown. The present disclosure may, however, be embodied in many different forms and should not be construed as being limited to the embodiments set forth herein. In the drawings, parts irrelevant to the description are omitted for the simplicity of explanation, and like numbers refer to like elements throughout.

Throughout the present disclosure, the expression "at least one of a, b or c" indicates only a, only b, only c, both a and b, both a and c, both b and c, all of a, b, and c, or variations thereof.

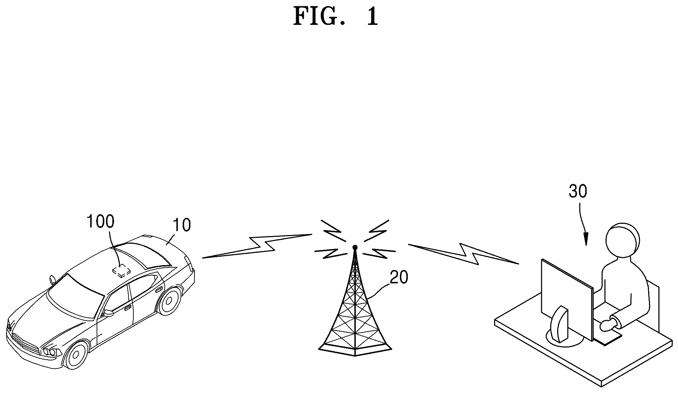

FIG. 1 is a view for explaining an operation method of an electronic device for vehicles, according to an embodiment.

Referring to FIG. 1, a vehicle 10 according to an embodiment may include an electronic device 100 for vehicles, and the electronic device 100 for vehicles, according to an embodiment, may include a communication module to perform communication with an external device.

According to an embodiment, the electronic device 100 for vehicles may be mounted on an external structure of the vehicle 10 or may be disposed within the external structure. For example, a communication module included in the electronic device 100 for vehicles may be disposed on a metal structure that forms the roof of the vehicle 10. However, embodiments are not limited thereto, and the communication module included in the electronic device 100 for vehicles may also be disposed on a bonnet, a bumper, a pillar, or a trunk of the vehicle.

The vehicle 10 may communicate with the external device by using the communication module included in the electronic device 100 while being driven. For example, the vehicle 10 may transmit or receive data to or from a base station 20 by using the communication module. The electronic device 100 for vehicles may identify one or more networks that are connectable to each other through the base station 20, and may perform a communication connection to the identified networks.

The electronic device 100 for vehicles according to an embodiment may include a plurality of antennas that transmit or receive data to or from the base station 20. The plurality of antennas may be disposed at various locations. For example, in order to dispose the plurality of antennas at various locations, an antenna module according to an embodiment may be configured as a remote radio head (RRH) module. The RRH module may include a plurality of antennas, and may convert high-frequency signals received from the plurality of antennas into baseband signals and transmit the baseband signals to a communication processor disposed in the vehicle 10 separately from the RRH module.

The electronic device 100 for vehicles according to an embodiment may include a plurality of RRH modules, and the plurality of RRH modules may be disposed at different locations on the vehicle 10. Accordingly, the electronic device 100 for vehicles may utilize various antenna paths, thereby improving the vehicle's communication stability.

The electronic device 100 for vehicles according to an embodiment may send an emergency call (or an eCall) to a preset number when an accident in the vehicle 10 is detected or upon a request from a passenger of the vehicle 10. The emergency call sent by the electronic device 100 for vehicles may be sent to an emergency call server 30 through the base station 20, and communication between the electronic device 100 and the emergency call server 30 may be achieved according to a response by the emergency call server 30. For example, the emergency call server 30 may include a public safety answering point (PSAP), an emergency service center, a control center, a hospital, or a government office. However, embodiments are not limited thereto.

The electronic device 100 for vehicles according to an embodiment may transmit voice data and/or environmental data of a passenger (e.g., data indicating an accident occurrence location, a vehicle type, or a driving direction, etc.) to an emergency call server 30. The emergency call server 30 may recognize an accident situation through the voice data and/or the environmental data received from the electronic device 100 for vehicles, and may perform rescue activities for the vehicle 10 and passengers. As an example of the rescue activities, the emergency call server 30 may transmit a request to dispatch a rescue team to the accident location of the vehicle 10 to an external device.

The electronic device 100 for vehicles according to an embodiment may increase the probability of a success in sending an emergency call, by sending an emergency call, based on performance information of a plurality of RRH modules, when an accident occurs in the vehicle. Accordingly, the safety of drivers and passengers may be secured.

Embodiments in which the electronic device 100 for vehicles according to an embodiment sends an emergency call, based on performance information of the plurality of RRH modules, will now be described in detail with reference to the drawings.

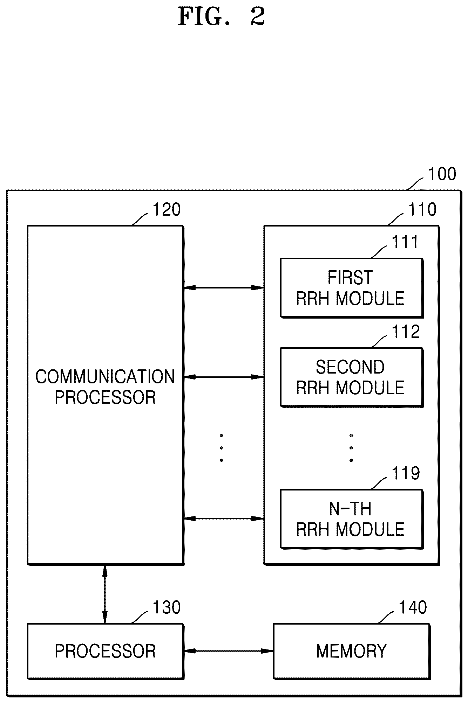

FIG. 2 is a block diagram of a structure of an electronic device for vehicles according to an embodiment.

Referring to FIG. 2, the electronic device 100 for vehicles may include a communication processor 120, a plurality of RRH modules 110, a processor 130, and a memory 140.

According to an embodiment, the communication processor 120, the processor 130, and the memory 140 may be configured as a telematic control unit (TCU) mounted on a vehicle. However, embodiments are not limited thereto.

The communication processor 120 according to an embodiment may include at least one module for performing communication with an external device. For example, the communication processor 120 may include a mobile communication module, and may transmit or receive data to or from a base station according to a mobile communication method. The mobile communication module may perform data transmission and reception through a network that follows at least one communication standard among, for example, CDMA, WCDMA, 3G mobile communication, 4G LTE, 5G ENDC, 5G SA, or 5G millimeter wave (mmWave) communication methods. However, embodiments are not limited thereto.

Alternatively, the communication processor 120 may include a short-range communication module in addition to a mobile communication module. The short-range communication module may perform data communication by using at least one of at least one wireless data communication method including, for example, Wi-Fi, Bluetooth, Zigbee, Wi-Fi Direct (WFD), infrared communication (infrared Data Association (IrDA)), Bluetooth Low Energy (BLE), Near Field Communication (NFC), Wireless Broadband Internet (Wibro), World Interoperability for Microwave Access (WiMAX), a shared wireless access protocol (SWAP), or Wireless Gigabit Alliance (WiGig).

The communication processor 120 according to an embodiment mediates signals between the processor 130 and an external device. In detail, the communication processor 120 may receive a baseband signal from any one of the plurality of RRH modules 110. The communication processor 120 may transform the baseband signal into a data signal and transmit the data signal to the processor 130.

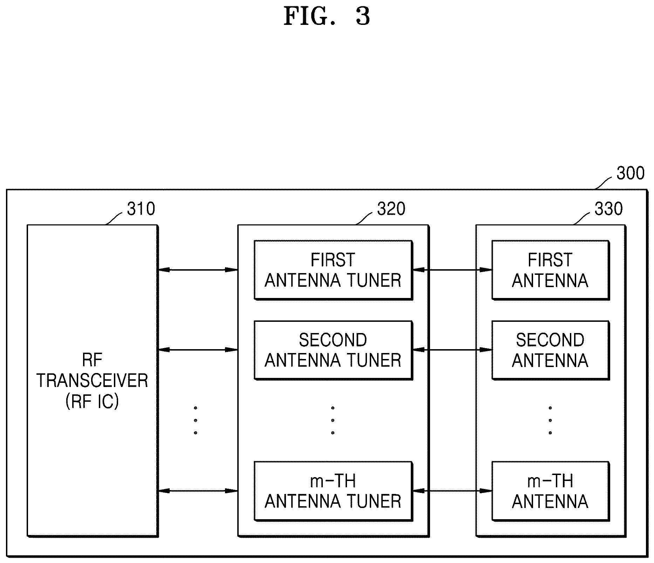

Each of the plurality of RRH modules 110 may include a plurality of antennas. An RRH module according to an embodiment will be described in detail below with reference to FIG. 3.

FIG. 3 is a block diagram of a structure of an RRH module according to an embodiment.

An RRH module of FIG. 3 may be one of first, second, through to N-th RRH modules 111, 112, through to 119 of FIG. 2.

The RRH module 300 according to an embodiment may include a plurality of antennas 330, a plurality of antenna tuners 320, and a radio frequency (RF) transceiver 310. The RF transceiver 310 may be composed of an RF integrated circuit (IC).

The RF transceiver 310 may generate a baseband signal from an RF signal of a specific frequency received through at least one of the plurality of antennas 330.

The RF transceiver 310 may change the frequency of the baseband signal received from the communication processor 120 to generate an RF signal having a desired frequency, and may transmit the RF signal to at least one of the plurality of antennas 330.

Although one RF transceiver 310 is illustrated in FIG. 3, embodiments are is not limited thereto, and there may be a plurality of RF transceivers 310.

The plurality of antennas 330 may convert the RF signal received from the RF transceiver 310 into electromagnetic waves and transmit the electromagnetic waves, or may convert electromagnetic waves received from the outside into RF signals and transmit the RF signals to the RF transceiver 310.

Because the RRH module 300 according to an embodiment includes a plurality of antennas 330, a signal quality may be further increased compared to when a communication connection is made to a communication network by using a single antenna. Because each RRH module includes the RF transceiver 310, the RF transceiver 310 may be positioned close to a plurality of antennas, and thus, a path through which an RF signal is transmitted may be shortened.

Each of the plurality of antenna tuners 320 according to an embodiment may be connected to each of the plurality of antennas 330. For example, a first antenna tuner may be connected to a first antenna, and a second antenna tuner may be connected to a second antenna.

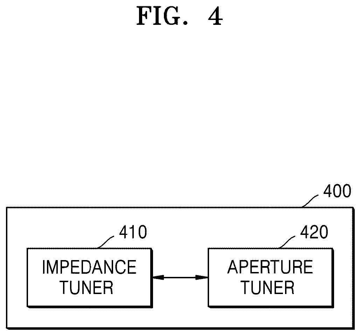

Each of the plurality of antenna tuners 320 may include an impedance tuner and an aperture tuner. This will be described in greater detail with reference to FIG. 4.

FIG. 4 is a block diagram of a structure of an antenna tuner according to an embodiment.

Referring to FIG. 4, an antenna tuner 400 according to an embodiment may be any one of the plurality of antenna tuners 320 of FIG. 3. The antenna tuner 400 may include an impedance tuner 410 and an aperture tuner 420.

The impedance tuner 410 may adjust the impedance characteristics of an antenna. The impedance tuner 410 may perform impedance matching by including an impedance matching circuit. Impedance matching refers to matching respective impedances of an input and an output with each other to reduce reflections caused by a difference in impedance between two different connection terminals. The impedance matching circuit may include at least one capacitor, at least one inductor and/or at least one resistor. The impedance tuner 410 may use an impedance matching circuit to increase or decrease the impedance required to minimize a reflection coefficient between a signal processing path and an antenna.

The impedance tuner 410 may perform impedance matching between the RF transceiver 310 or an RF front end and the antenna to minimize power loss and reflection loss of a signal, thereby increasing a voltage standing wave ratio (VSWR) of the antenna. Therefore, overall efficiency of the antenna may be improved.

The aperture tuner 420 may adjust the characteristics of the antenna. For example, the aperture tuner 420 may change the frequency band of the antenna. The aperture tuner 420 may include a circuit including at least one capacitor, at least one inductor, at least one resistor, and/or at least one switch. The aperture tuner 420 may change the frequency band of the antenna by using the circuit.

Referring back to FIG. 2, the communication processor 120 disposed apart from the plurality of RRH modules 110 may transmit or receive baseband signals to or from the plurality of RRH modules 110 through cables, etc. However, embodiments are not limited thereto.

An RRH structure including one communication processor 120 according to an embodiment and a plurality of RRH modules 110 disposed at various locations on a vehicle to be spaced apart from the communication processor 120 may reduce costs and also improve the communication stability of the vehicle.

The processor 130 may control overall operations of the electronic device 100 for vehicles. The processor 130 according to an embodiment may include an application processor.

The processor 130 may execute one or more programs stored in the memory 140. The memory 140 according to an embodiment may store various pieces of data, programs, or applications for driving and controlling the electronic device 100 for vehicles.

The processor 130 may include hardware components that perform arithmetic, logic, input/output operations and signal processing. The processor 130 may include, but is not limited to, at least one of a central processing unit, a microprocessor, a graphics processing unit, application specific integrated circuits (ASICs), digital signal processors (DSPs), digital signal processing devices (DSPDs), programmable logic devices (PLDs), or field programmable gate arrays (FPGAs).

The memory 140 may include a non-volatile memory including at least one of a flash memory type, a hard disk type, a multimedia card micro type, a card type memory (for example, a secure digital (SD) or extreme digital (XD) memory), a read-only memory (ROM), an electrically erasable programmable ROM (EEPROM), and a programmable ROM (PROM), and a volatile memory such as a random access memory (RAM) or a static random access memory (SRAM).

Instructions, a data structure, and program code readable by the processor 130 may be stored in the memory 140. According to an embodiment below, the processor 130 may be implemented by executing the instructions or program codes of a program stored in the memory.

The processor 130 according to an embodiment may control the communication processor 120 to perform communication with an external device through RRH modules, during normal driving of the vehicle. When performing communication with the external device, the processor 130 may obtain transmission signal quality information and reception signal quality information of the RRH modules.

The processor 130 according to an embodiment may determine priority information for the plurality of RRH modules determined according to the transmission signal quality information of the plurality of RRH modules. The processor 130 may store the priority information for the plurality of RRH modules in the memory 140. The processor 130 may periodically update the priority information according to the obtained transmission signal quality information.

When an accident occurs while a vehicle is being driven, the processor 130 according to an embodiment may detect the occurrence of the vehicle's accident. The processor 130 may sense information related to the vehicle's status or driving of the vehicle (vehicle's driving direction, vehicle's driving speed, vehicle's driving acceleration, etc.) to detect whether an accident has occurred in the vehicle. However, embodiments are not limited thereto.

The processor 130 may send an emergency call (or an eCall) to a preset number when an accident in the vehicle is detected or upon a request from a passenger of the vehicle. The sent emergency call may be sent to an emergency call server through a base station, and communication between the electronic device for vehicles and the emergency call server may be achieved according to a response by the emergency call server. In this case, the emergency call server, which is a public safety answering point (PSAP), may include an emergency service center, a control center, a hospital, or a government office. However, embodiments are not limited thereto.

The processor 130 according to an embodiment may control emergency call sending, based on the priority information for the plurality of RRH modules stored in the memory 140.

The processor 130 may send an emergency call by setting the antennas included in some of the plurality of RRH modules to a frequency band according to transmission performance information of the some RRH modules and setting the antennas included in the remaining RRH modules to a frequency band according to reception performance information of the remaining RRH modules.

For example, the processor 130 may select some RRH modules from among the plurality of RRH modules according to the priority information. The processor 130 may select first and second RRH modules having first and second priorities as the some RRH modules. The processor 130 may set a frequency band corresponding to the antennas included in the first RRH module to a first frequency band, when the first RRH module has good transmission signal quality information in the first frequency band. The processor 130 may also set a frequency band corresponding to the antennas included in the second RRH module to a second frequency band, when the second RRH module has good transmission signal quality information in the second frequency band. The processor 130 may send an emergency call by using the first RRH module and the second RRH module.

The processor 130 may identify a frequency band with good reception signal quality information from each of the remaining RRH modules, and may set the antennas included in each of the remaining RRH modules to the identified frequency band.

When a communication connection with the emergency call server is successful, the processor 130 according to an embodiment may transmit voice data and/or environmental data of a passenger (e.g., data indicating an accident occurrence location, a vehicle type, or a driving direction) to the emergency call server via a connected RRH module.

When a communication connection with the emergency call server fails, the processor 130 may send an emergency call by identifying a frequency band with good transmission signal quality information from each of the remaining RRH modules and setting the antennas included in each of the remaining RRH modules to the identified frequency band.

The processor 130 according to an embodiment may select an RRH module with a highest priority, based on the priority information of the plurality of RRH modules. The processor 130 may select an RRH module of a highest priority having optimum transmission signal quality information, based on priority information for a plurality of previously-stored RRH modules.

The processor 130 may send an emergency call by setting a frequency band corresponding to a plurality of antennas included in the RRH module having the highest priority to a frequency band with an optimum transmission signal quality of the selected RRH module.

When a communication connection with the emergency call server fails, the processor 130 may send an emergency call by selecting an RRH module having a next-highest priority according to the priority information and setting a frequency band corresponding to the antennas included in the selected module to a frequency band with an optimum transmission signal quality of the selected RRH module.

The block diagram of the electronic device 100 for vehicles illustrated in FIG. 2, the block diagram of the RRH module 300 illustrated in FIG. 3, and the block diagram of the antenna tuner 400 illustrated in FIG. 4 are block diagrams for one embodiment. Components illustrated in the block diagrams may be combined or omitted according to the specifications of the electronic device 100, the RRH module 300, or the antenna tuner 400 when being actually implemented, or additional components may be included in the block diagrams. In other words, two or more components may be combined into a single component, or a single component may be divided into two or more components. A function performed in each block is merely an example to explain embodiments, and a detailed operation or device of each block does not limit the scope of the embodiments.

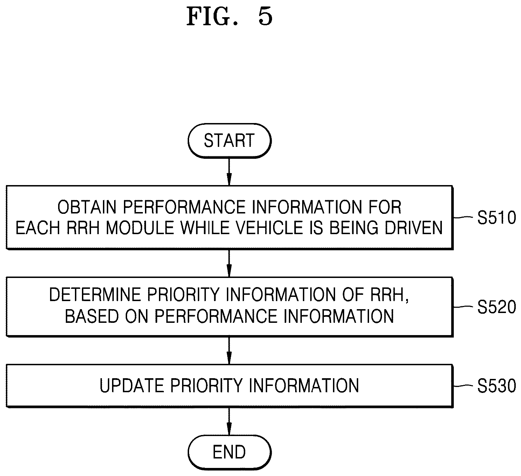

FIG. 5 is a flowchart of an operation method of an electronic device for vehicles according to an embodiment.

The electronic device 100 for vehicles according to an embodiment may obtain performance information for each RRH module while a vehicle is being driven (S510).

When the vehicle starts running, the electronic device 100 for vehicles may communicate with an external device by using the communication processor 120 and the plurality of RRH modules 110. The performance information of the RRH modules may include transmission signal quality information and reception signal quality information of the RRH modules. The signal quality information may be a value calculated based on signal characteristics, such as a signal intensity of an RRH module. However, embodiments are not limited thereto, and the signal quality information may be determined in various ways.

The electronic device 100 for vehicles may obtain quality information (transmission signal quality information) of signals transmitted to an external device through a plurality of RRH modules. For example, the electronics device 100 for vehicles may measure a voltage standing wave ratio (VSWR) for the plurality of RRH modules or the plurality of antennas.

The electronic device 100 for vehicles may obtain quality information (reception signal quality information) of a signal received from the external device. For example, the electronic device 100 for vehicles may measure reference signal received power (RSRP) indicating the sensitivity of a received signal from the RRH modules or the plurality of antennas, a Signal to Interface & Noise Ratio (SINR) indicating the signal-to-noise ratio of the received signal, and a received signal strength indicator (RSSI) indicating the strength of the received signal. At this time, the quality information of the signal may be obtained for each frequency band.

The electronic device 100 for vehicles according to an embodiment may determine the priority information for the RRH modules, based on the performance information for each RRH obtained in operation S510 (S520).

At this time, the priority information for the plurality of RRH modules may be determined based on the transmission signal quality information evaluated in the frequency band. In this case, the signal quality information may be a value calculated based on signal characteristics, such as a transmission signal intensity, etc. checked in the frequency band. For example, the transmission signal quality information may include a VSWR value. However, embodiments are not limited thereto, and a signal quality information may be determined in various ways.

The electronic device 100 for vehicles according to an embodiment may update previously-stored priority information by using the priority information determined in operation S520 (S530).

The priority information for the plurality of RRH modules according to an embodiment may be previously stored in a memory. When a vehicle is driven, the transmission signal quality information of the RRH modules may change according to a driving environment, so the electronic device 100 for vehicles may update the priority information that changes according to the transmission signal quality information.

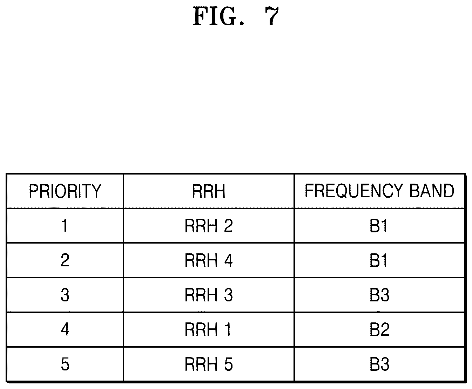

The priority information for the plurality of RRH modules according to an embodiment will be described in detail with reference to FIG. 7.

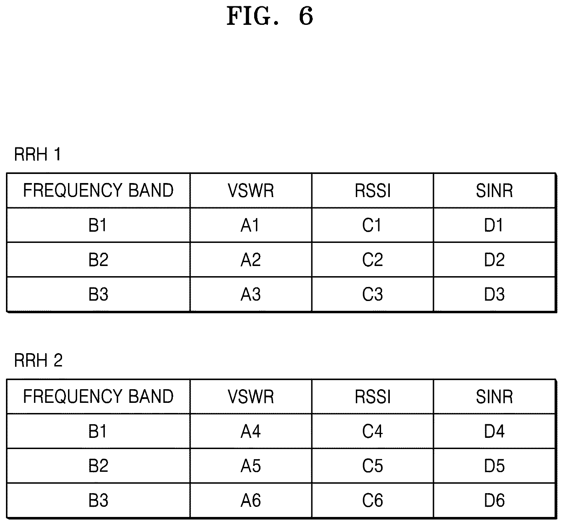

FIG. 6 illustrates an example of the performance information of the plurality of RRH modules according to an embodiment.

Referring to FIG. 6, when the electronic device 100 for vehicles communicates with an external device while the vehicle is being driven, the electronic device 100 for vehicles may obtain the performance information for the plurality of RRH modules. For example, the performance information of an RRH module may include transmission signal quality information and reception signal quality information of the RRH module. The signal quality information may be a value calculated based on signal characteristics, such as a signal intensity of the RRH module. However, embodiments are not limited thereto, and the signal quality information may be determined in various ways.

The electronic device 100 for vehicles may obtain quality information (transmission signal quality information) of signals transmitted to the external device through the plurality of RRH modules. For example, the electronics device 100 for vehicles may measure the voltage standing wave ratio (VSWR) for the plurality of RRH modules or the plurality of antennas. For example, the electronic device 100 for vehicles may measure a VSWR for each frequency band of the first RRH module RRH 1, as illustrated in FIG. 6. At this time, the VSWR of the first RRH module may be expressed as a representative value of the VSWRs for the plurality of antennas included in the first RRH module. For example, the VSWR of the first RRH module may be an average value or a maximum value of the VSWRs for the plurality of antennas included in the first RRH module. However, embodiments are not limited thereto.

The electronic device 100 for vehicles may also measure a VSWR for each frequency band of the second RRH module RRH 2, similar to the first RRH module RRH 1.

The electronic device 100 for vehicles may obtain quality information (reception signal quality information) of a signal received from the external device. For example, the electronic device 100 for vehicles may measure reference signal received power (RSRP) indicating the sensitivity of a received signal from the RRH modules or the plurality of antennas, a Signal to Interface & Noise Ratio (SINR) indicating the signal-to-noise ratio of the received signal, and a received signal strength indicator (RSSI) indicating the strength of the received signal.

For example, the electronic device 100 for vehicles may measure an RSSI and an SINR for each frequency band of the first RRH module RRH 1, as illustrated in FIG. 6. At this time, the RSSI of the first RRH module may be expressed as a representative value of each of the RSSIs for the plurality of antennas included in the first RRH module. For example, the RSSI of the first RRH module may be an average value or maximum value of the RSSIs for the plurality of antennas included in the first RRH module. However, embodiments are not limited thereto.

The SINR of the first RRH module may be expressed as a representative value of each of the SINRs for the plurality of antennas included in the first RRH module. For example, the SINR of the first RRH module may be an average value or maximum value of the SINRs for the plurality of antennas included in the first RRH module. However, embodiments are not limited thereto.

The electronic device 100 for vehicles may also measure an RSSI and an SINR for each frequency band for the second RRH module RRH 2, similar to the first RRH module RRH 1.

FIG. 7 is a table showing an example of priority information for a plurality of RRH modules, according to an embodiment.

Referring to FIG. 7, priorities for the plurality of RRH modules may be set according to transmission performance information.

The electronic device 100 for vehicles according to an embodiment may determine the priority information for the plurality of RRH modules, based on transmission signal quality information obtained for the plurality of RRH modules. For example, as described above with reference to FIG. 6, respective VSWR values for frequency bands may be obtained for the plurality of RRH modules, and respective transmission signal quality values for frequency bands of the plurality of RRH modules may be calculated based on the VSWR values. At this time, the average value or maximum value of the VSWR values may be calculated as the transmission signal quality value of an RRH. The electronic device 100 for vehicles may determine priorities for the plurality of RRH modules, based on transmission signal quality value of for the RRH.

For example, the second RRH RRH 2, which is an RRH module having a largest transmission signal quality value, may have a first priority. In this case, a frequency band corresponding to the largest transmission signal quality value may be B1.

For example, the fourth RRH RRH 4, which is an RRH module having a large transmission signal quality value, may have a second priority, next to the second RRH module. In this case, a frequency band corresponding to the transmission signal quality value of the fourth RRH module may be B1.

The priority information illustrated in FIG. 7 is only an example, and priority information for the plurality of RRH modules may be determined in various ways.

For example, the electronic device 100 for vehicles may determine the priority information for the plurality of RRH modules for each frequency band. However, embodiments are not limited thereto.

In addition, priority information according to an embodiment may be stored in memory, and, as described above with reference to FIG. 5, may be periodically updated based on transmission signal quality information obtained for the plurality of RRH modules.

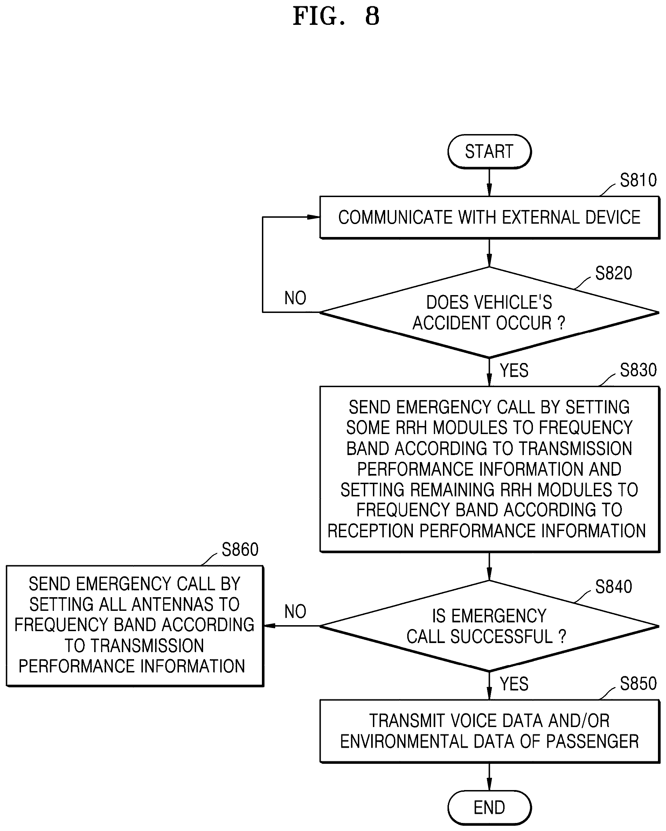

FIG. 8 is a flowchart of an operation method of an electronic device for vehicles according to an embodiment.

Referring to FIG. 8, the electronic device 100 for vehicles may communicate with an external device through an RRH module during normal driving of a vehicle (S810).

When communicating with the external device, the electronic device 100 for vehicles may obtain performance information of RRH modules. The performance information of the RRH modules may include transmission signal quality information and reception signal quality information of the RRH modules. The signal quality information may be a value calculated based on signal characteristics, such as a signal intensity of an RRH module. However, embodiments are not limited thereto, and the signal quality information may be determined in various ways.

The electronic device 100 for vehicles may determine and update priority information of the RRH modules, based on the obtained transmission signal quality information.

When an accident occurs while a vehicle is being driven, the electronic device 100 for vehicles may detect the occurrence of the vehicle's accident (S820).

For example, the electronic device 100 for vehicles may sense information related to the vehicle's status or the vehicle's driving (the vehicle's driving direction, the vehicle's driving speed, the vehicle's driving acceleration, etc.) to detect whether an accident has occurred in the vehicle. However, embodiments are not limited thereto.

The electronic device 100 for vehicles may send an emergency call (or an eCall) to a preset number when an accident in the vehicle is detected or upon a request from a passenger of the vehicle. The emergency call sent by the electronic device 100 for vehicles may be transmitted to an emergency call server through a base station, and communication between the electronic device for vehicles and the emergency call server may be achieved according to a response by the emergency call server. In this case, the emergency call server, which is a public safety answering point (PSAP), may include an emergency service center, a control center, a hospital, or a government office. However, embodiments are not limited thereto.

The electronic device 100 for vehicles may send an emergency call by setting the antennas included in some of the plurality of RRH modules to a frequency band according to transmission performance information of the some RRH modules and setting the antennas included in the remaining RRH modules to a frequency band according to reception performance information of the remaining RRH modules (S830).

For example, the electronic device 100 for vehicles may select some RRH modules from among the plurality of RRH modules according to the priority information. The electronic device 100 for vehicles may select first and second RRH modules having first and second priorities as some RRH modules, and, when the first RRH module has good transmission signal quality information in the first frequency band, may set a frequency band corresponding to the antennas included in the first RRH module to the first frequency band. When the second RRH module has good transmission signal quality information in the second frequency band, the electronic device 100 for vehicles may set a frequency band corresponding to the antennas included in the second RRH module to a second frequency band.

The electronic device 100 for vehicles may send an emergency call by using the first RRH module and the second RRH module.

The electronic device 100 for vehicles may identify a frequency band with good reception signal quality information from each of the remaining RRH modules, and may set the antennas included in each of the remaining RRH modules to the identified frequency band.

When a communication connection with the emergency call server is successful, the electronic device 100 for vehicles according to an embodiment may transmit voice data and/or environmental data of a passenger (e.g., data indicating an accident occurrence location, a vehicle type, or a driving direction) to the emergency call server via a connected RRH module (S850).

The emergency call server may recognize an accident situation through the voice data and/or the environmental data received from the electronic device 100 for vehicles, and may perform rescue activities for the vehicle and passengers. As an example of the rescue activities, the emergency call server may transmit a request to dispatch a rescue team to the accident location of the vehicle to the external device.

When a communication connection with the emergency call server fails, the electronic device 100 for vehicles may send an emergency call by identifying a frequency band with good transmission signal quality information from each of the remaining RRH modules and setting the antennas included in each of the remaining RRH modules to the identified frequency band (S860).

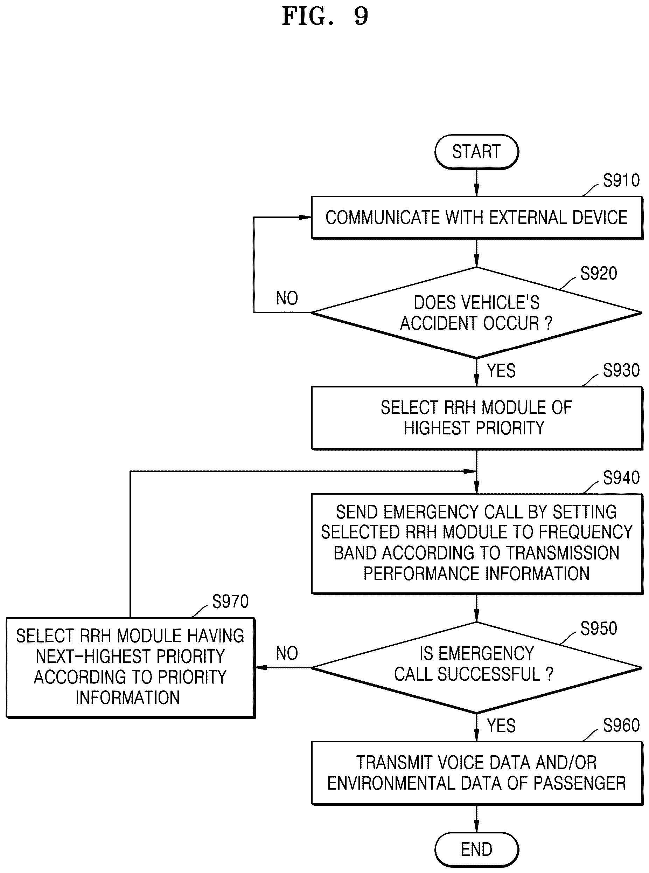

FIG. 9 is a flowchart of an operation method of an electronic device for vehicles according to an embodiment.

Referring to FIG. 9, the electronic device 100 for vehicles may communicate with an external device through an RRH module during normal driving of a vehicle (S910).

When communicating with the external device, the electronic device 100 for vehicles may obtain performance information of RRH modules. The performance information of the RRH modules may include transmission signal quality information and reception signal quality information of the RRH modules. The signal quality information may be a value calculated based on signal characteristics, such as a signal intensity of an RRH module. However, embodiments are not limited thereto, and the signal quality information may be determined in various ways.

The electronic device 100 for vehicles may determine and update priority information of the RRH modules, based on the obtained transmission signal quality information.

When an accident occurs while a vehicle is being driven, the electronic device 100 for vehicles may detect the occurrence of the vehicle's accident (S920).

For example, the electronic device 100 for vehicles may sense information related to the vehicle's status or the vehicle's driving (the vehicle's driving direction, the vehicle's driving speed, the vehicle's driving acceleration, etc.) to detect whether an accident has occurred in the vehicle. However, embodiments are not limited thereto.

The electronic device 100 for vehicles may send an emergency call (or an eCall) to a preset number when an accident in the vehicle is detected or upon a request from a passenger of the vehicle. The emergency call sent by the electronic device 100 for vehicles may be transmitted to an emergency call server through a base station, and communication between the electronic device for vehicles and the emergency call server may be achieved according to a response by the emergency call server. In this case, the emergency call server, which is a public safety answering point (PSAP), may include an emergency service center, a control center, a hospital, or a government office. However, embodiments are not limited thereto.

The electronic device 100 for vehicles according to an embodiment may select an RRH module of a highest priority, based on the priority information of the plurality of RRH modules (S930).

The electronic device 100 for vehicles may select an RRH module of a highest priority having optimum transmission signal quality information, based on priority information for a plurality of previously-stored RRH modules. For example, the electronic device 100 for vehicles may select a second RRH module having optimum transmission signal quality information, based on transmission signal quality information for a plurality of RRH modules obtained while the vehicle is being driven.

The electronic device 100 for vehicles according to an embodiment may send an emergency call by setting a frequency band corresponding to a plurality of antennas included in the RRH module having the highest priority to a frequency band with an optimum transmission signal quality of the selected RRH module.

For example, the electronic device 100 for vehicles may send an emergency call by setting a frequency band corresponding to antennas included in the second RRH module to B1, which is a frequency band with an optimum transmission signal quality in the second RRH module.

In addition, the electronic device 100 for vehicles may receive a signal from an external device by setting a frequency band corresponding to antennas included in the remaining RRH modules to a frequency band with an optimum reception signal quality in each of the remaining RRH modules.

When a communication connection with the emergency call server is successful, the electronic device 100 for vehicles according to an embodiment may transmit voice data and/or environmental data of a passenger (e.g., data indicating an accident occurrence location, a vehicle type, or a driving direction) to the emergency call server via a connected second RRH module (S960).

On the other hand, when a communication connection with the emergency call server fails, the electronic device 100 for vehicles may select an RRH module having a next-highest priority according to the priority information (S970), and may send an emergency call by setting a frequency band corresponding to the antennas included in the selected module to a frequency band with an optimum transmission signal quality of the selected RRH module (S940).

For example, the electronic device 100 for vehicles may send an emergency call by setting a frequency band corresponding to antennas included in a fourth RRH module having a ranking-2 priority to B1, which is a frequency band with an optimum transmission signal quality in the fourth RRH module.

In addition, the electronic device 100 for vehicles may receive a signal from an external device by setting a frequency band corresponding to antennas included in the remaining RRH modules to a frequency band with an optimum reception signal quality in each of the remaining RRH modules.

When a communication connection with the emergency call server is successful, the electronic device 100 for vehicles according to an embodiment may transmit voice data and/or environmental data of a passenger (e.g., data indicating an accident occurrence location, a vehicle type, or a driving direction) to the emergency call server via a connected fourth RRH module.

On the other hand, when the sending of the emergency call by using the fourth RRH module fails, the electronic device 100 for vehicles may transmit the emergency call by using the RRH module with a second-highest priority according to the priority information in the same manner.

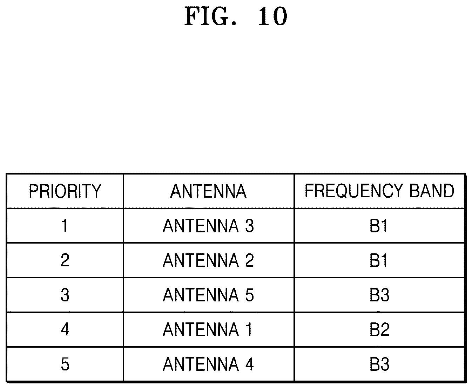

FIG. 10 is a table showing an example of priority information for a plurality of antennas included in one RRH module according to an embodiment.

In the operation S830 of setting the frequency band corresponding to the antennas included in some RRH modules among the plurality of RRH modules of FIG. 8 to a frequency band according to transmission performance information of the some RRH modules or the operation S940 of setting the frequency band corresponding to the plurality of antennas included in the selected RRH module of FIG. 9 to the frequency band according to the transmission performance information of the some RRH modules, the electronic device 100 for vehicles according to an embodiment may set some antennas to a frequency band in which the antennas have an optimum transmission signal quality, and may set the remaining antennas to a reception frequency range in which the remaining antennas have an optimum reception signal quality, based on priority information for the plurality of antennas included in the RRH module.

The electronic device 100 for vehicles according to an embodiment may previously store priority information according to transmission performance of antennas included in each of a plurality of RRH modules.

Based on transmission signal quality information for each of the plurality of antennas included in the RRH module, the electronic device 100 for vehicles may determine priority information for the plurality of antennas. However, embodiments are not limited thereto.

For example, the electronic device 100 for vehicles may determine the priority information for the plurality of antennas, based on VSWR values respectively obtained for the plurality of antennas. However, embodiments are not limited thereto.

FIG. 10 may be a table showing priority information for a plurality of antennas included in a first RRH module among a plurality of RRH modules. In this case, the first RRH module may include more antennas in addition to five antennas (antenna 3, antenna 2, antenna 5, antenna 1, and antenna 4).

The electronic device 100 for vehicles according to an embodiment may set a frequency band of some antennas, based on the priority information of FIG. 10, when an emergency call is sent using the first RRH module.

For example, the electronic device 100 for vehicles may send an emergency call by setting an antenna 3 to a frequency band B1, an antenna 2 to the frequency band B1, an antenna 5 to a frequency band B3, an antenna 1 to a frequency band B2, and an antenna 4 to a frequency band B3. In addition, the electronic device 100 for vehicles may receive a signal from an external device by setting the remaining antennas to a frequency band with an optimum reception signal quality. However, embodiments are not limited thereto.

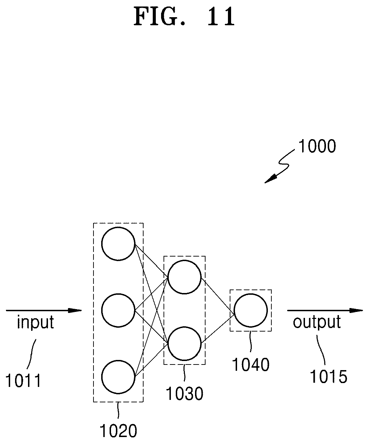

FIG. 11 is a diagram for explaining an operation performed using artificial intelligence technology, according to a disclosed embodiment.

In detail, the processor 120 of the electronic device 100 for vehicles may perform, by using an artificial intelligence technology of performing a computation through a neural network, at least one of i) operation of determining performance information of an RRH module, based on a signal quality for a plurality of antennas included in RRH modules, ii) operation of determining priority information, based on performance information for the plurality of RRH modules, and iii) operation of selecting an RRH module that is to perform an emergency call, based on the priority information.

The artificial intelligence technology (hereinafter, 'AI' technology) is to obtain an intended result by performing processing, such as analysis and/or classification, on input data by performing computations through a neural network.

The AI technology may be implemented using an algorithm. Here, the algorithm for implementing the AI technology, or a set of the algorithms is referred to as a neural network. The neural network may receive input data, perform computations for the aforementioned analysis and/or classification, and output result data. As such, in order for the neural network to accurately output the result data corresponding to the input data, the neural network needs to be trained. Here, the 'training' may refer to training the neural network so that the neural network discovers or learns by itself a method of inputting various pieces of data and analyzing the received data, a method of analyzing the input data pieces, a method of classifying the input data pieces, and/or a method of extracting a feature necessary for result data creation from the input data pieces. In detail, through the training, the neural network may optimize and set weight values within the neural network by training training data (e.g., a plurality of different images). An intended result is output by learning the input data by itself, through the neural network having the optimized weight values.

In detail, when the number of hidden layers, which are internal layers performing computations, is plural, i.e., when the depth of the neural network performing computations increases, the neural network may be classified as a deep neural network. Examples of the neural network may include a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), and Deep Q-Networks. However, embodiments of the disclosure are not limited to the above-described examples. The neural networks may be subdivided. For example, the CNN may be classified into a Deep Convolution Neural Network (DCNN) or a Capsnet neural network (not shown).

According to a disclosed embodiment, an 'AI model' may refer to a neural network including at least one layer operating to receive input data and output an intended result. The 'AI model' may also refer to an algorithm or a set of a plurality of algorithms for outputting an intended result by performing a computation through a neural network, a processor for executing the algorithm or the set of algorithms, software for executing the algorithm or the set of algorithms, or hardware for executing the algorithm or the set of algorithms.

Referring to FIG. 11, a neural network 1000 may be trained by receiving training data. A trained neural network 1000 may receive input data 1011 via an input terminal 1020, and an output terminal 1040 may perform a computation for analyzing the input data 1011 and outputting output data 1015, which is an intended result. The computation through a neural network may be performed through a hidden layer 1030. Although FIG. 9 briefly illustrates the hidden layer 1030 as one layer, the hidden layer 1030 may be formed of a plurality of layers.

In detail, in a disclosed embodiment, a neural network 1000 may be trained to determine performance information of an RRH module, based on a signal quality for a plurality of antennas included in RRH modules. In addition, in a disclosed embodiment, the neural network 1000 may be trained to determine priority information, based on performance information for a plurality of RRH modules. Moreover, in a disclosed embodiment, the neural network 1000 may be trained to select an RRH module that is to perform emergency call sending, based on the priority information.

In a disclosed embodiment, the neural network 1000 may be implemented in the processor 120 of the electronic device 100 for vehicles, the neural network 1000 performing, by using an artificial intelligence technology of performing a computation through a neural network, at least one of i) operation of determining performance information of an RRH module, based on a signal quality for a plurality of antennas included in RRH modules, ii) operation of determining priority information, based on performance information for the plurality of RRH modules, and iii) operation of selecting an RRH module that is to perform an emergency call, based on the priority information. Alternatively, the neural network 1000 performing at least one of i) operation of determining performance information of an RRH module, based on a signal quality for a plurality of antennas included in RRH modules, ii) operation of determining priority information, based on performance information for the plurality of RRH modules, and iii) operation of selecting an RRH module that is to perform an emergency call, based on the priority information may be distinguished from the electronic device 100 for vehicles, and may be implemented within a separate electronic device (not shown) or a processor (not shown) located within a vehicle.

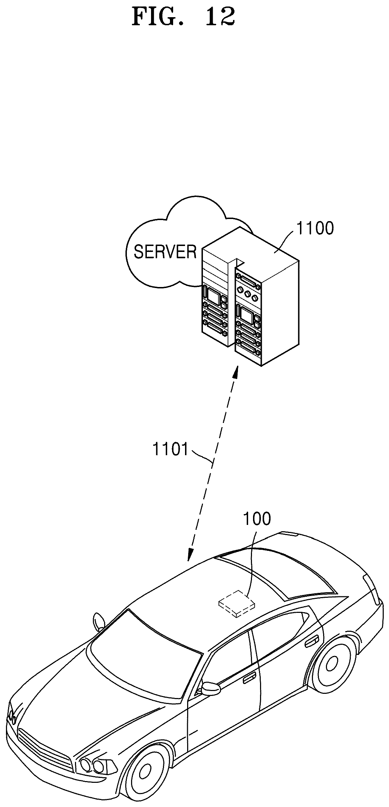

Computations through the neural network described above may be performed by a server (not shown) capable of communicating with the electronic device 100 for vehicles according to an embodiment through a wireless communication network. Communication between the electronic device 100 for vehicles and the server (not shown) will now be described in detail with reference to FIGS. 11 and 12.

FIG. 12 is a diagram illustrating an electronic device for vehicles according to a disclosed embodiment interoperating with a server.

A server 1100 may include a server, a server system, a server-based apparatus, or the like, which transmits and receives data to and from the electronic device 100 for vehicles via a communication network 1101 and processes the data.

According to a disclosed embodiment, the server 1100 includes a communication interface configured to communicate with the electronic device 100 for vehicles installed within the vehicle 10, and a processor configured to perform at least one instruction.

The server 1100 may receive, from the electronic device 100 for vehicles, signal quality information for a plurality of antennas included in RRH modules, performance information for the plurality of RRH modules, priority information for the RRH modules, etc.

The server 1100 may train an AI model and store the trained AI model. The server 1100 may perform, by using the trained AI model and the received information, at least one of i) operation of determining performance information of an RRH module, based on a signal quality for a plurality of antennas included in RRH modules, ii) operation of determining priority information, based on performance information for the plurality of RRH modules, and iii) operation of selecting an RRH module that is to perform an emergency call, based on the priority information.

The server 1100 may also control the communication interface to transmit, to the electronic device 100 for vehicles, priority information for the plurality of RRH modules, information about an RRH module that is to be used for communication connection, etc.

In general, in terms of a memory storage capacity, a computation processing speed, an ability to collect a training data set, and/or the like, the electronic device 100 for vehicles may be limited compared to the server 1100. Accordingly, an operation requiring a large data storage and a large computation amount may be performed by the server 1100, and then required data and/or the used AI model may be transmitted to the electronic device 100 for vehicles through a communication network. Then, the electronic device 100 for vehicles may perform a required operation quickly and easily without a large capacity memory and a processor having fast operation capability, by receiving and using the required data and/or the AI model through the server.

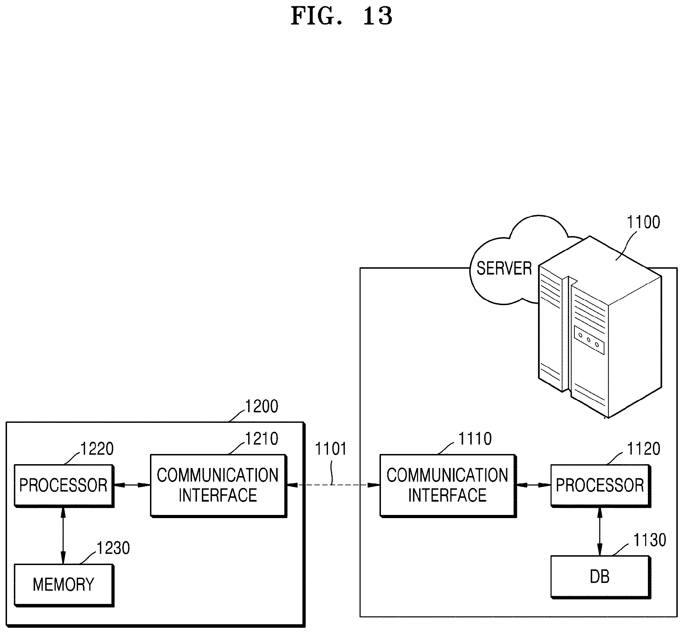

FIG. 13 is a diagram for explaining FIG. 12 in greater detail.

An electronic device 1200 for vehicles of FIG. 13 may be an example of the electronic device 100 for vehicles of FIG. 12.

Referring to FIG. 13, the server 1100 may include a communication interface 1110, a processor 1120, and a database (DB) 1130, and the electronic device 1200 for vehicles may include a communication interface 1210, a processor 1220, and a memory 1230. The communication interface 1210 of the electronic device 1200 for vehicles may include the communication processor 120 of FIG. 2 and the plurality of RRH modules 110 of FIG. 12.

The processor 1220 of the electronic device 1200 for vehicles may correspond to the processor 130 of FIG. 2, and the memory 1230 of the electronic device 1200 for vehicles may correspond to the memory 140 of FIG. 2. Therefore, detailed descriptions of the communication interface 1210, the processor 1220, and the memory 1230 of the electronic device 1200 for vehicles will be omitted.

The communication interface 1110 of the server 1100 may include at least one component that enables communication with the electronic device 1200 for vehicles. The communication interface 1110 includes at least one communication module, such as a short-range communication module, a wired communication module, a mobile communication module, or a broadcast receiving module. The at least one communication module refers to a communication module capable of performing transmission and reception of data through a tuner for receiving broadcast, or a network conforming to a communication standard, such as Bluetooth, wireless local area network (WLAN) (e.g., Wi-Fi), wireless broadband (WiBro), World Interoperability for Microwave Access (WiMax), code-division multiple access (CDMA), wideband CDMA (WCDMA), Internet, 3G, 4G, 5G, and/or communication schemes using millimeter waves (mmWAVE).

For example, when the communication interface 1110 performs communication by using millimeter waves (mmWAVE), the communication interface 1110 may quickly transmit and receive a large amount of data. In detail, the vehicle may quickly receive a large amount of data to quickly provide data required for the safety of the vehicle (e.g., data required for autonomous driving or data required for a navigation service) and content for users (e.g., movies or music), thereby improving safety of the vehicle and/or user convenience.

In detail, the mobile communication module included in the communication interface 1110 may communicate with another device (e.g., a server (not shown)) positioned at a remote location through a communication network conforming to a communication standard, such as 3G, 4G, and/or 5G. Here, the communication module that communicates with the server (not shown) positioned at a remote location may be referred to as a 'long-range communication module'.

The processor 1120 controls overall operations of the server 1100. For example, the processor 1120 may perform required operations by executing at least one of at least one instruction and programs of the server 1100.

The DB 1130 may include a memory (not shown), and may store, in the memory (not shown), at least one of at least one instruction, program, and data required for the server 1100 to perform a predetermined operation. The DB 1030 may store pieces of data required by the server 1000 to perform computations according to a neural network.

In detail, in a disclosed embodiment, the server 1100 may store the neural network 1000 described above with reference to FIG. 10. The neural network 1000 may be stored in at least one of the processor 1120 or the DB 1130. The neural network 1000 included in the server 1100 may be a completely trained neural network.

The server 1100 may transmit the completely trained neural network to the communication interface 1210 of the electronic device 1200 for vehicles through the communication interface 1110. Then, the electronic device 1200 for vehicles may obtain and store the completely trained neural network, and obtain intended output data through the neural network.

An electronic device for vehicles according to an embodiment may include a communication processor and a plurality of remote radio head (RRH) modules connected to the communication processor.

Each of the plurality of RRH modules may include a plurality of antennas and antenna tuners for tuning the plurality of antennas.

The electronic device for vehicles according to an embodiment may include a memory storing one or more instructions, and at least one processor configured to execute the one or more instructions stored in the memory.

The at least one processor may be configured to execute the one or more instructions to obtain performance information of each of the plurality of RRH modules during normal driving of a vehicle,

The at least one processor may be configured to execute the one or more instructions to, when occurrence of an accident of the vehicle is detected, determine some RRH modules among the plurality of RRH modules, based on the performance information.

The at least one processor may be configured to execute the one or more instructions to control the antenna tuners to set a frequency band corresponding to the antennas included in the some RRH modules to a frequency band determined according to transmission performance information of the some RRH modules.

The at least one processor may be configured to execute the one or more instructions to control the antenna tuners to set a frequency band corresponding to the antennas included in the remaining RRH modules to a frequency band determined according to reception performance information of the remaining RRH modules.

The at least one processor may be configured to execute the one or more instructions to control the communication processor to send an emergency call by using the some RRH modules.

The at least one processor may be configured to execute the one or more instructions to control the communication processor to send a signal from an external device by using the remaining RRH modules.

The performance information of each of the plurality of RRH modules may include transmission signal quality information and reception signal quality information of the plurality of RRHs for each of the frequency bands.

The at least one processor may be configured to execute the one or more instructions to determine priority information of the plurality of RRHs, based on the transmission signal quality information of the plurality of RRHs for each of the frequency bands.

The at least one processor may be configured to execute the one or more instructions to determine the some RRH modules, based on the priority information.

The at least one processor may be configured to execute the one or more instructions to control the antenna tuners to set a frequency band corresponding to the antennas included in the some RRH modules to a frequency band in which the transmission signal quality information of the some RRH modules is optimum.

The at least one processor may be configured to execute the one or more instructions to control the antenna tuners to set a frequency band corresponding to the antennas included in the remaining RRH modules to a frequency band in which the transmission signal quality information of the remaining RRH modules is optimum.

A value representing the transmission signal quality may include a Voltage Standing Wave Ratio (VSWR).

A value representing the reception signal quality may include a Signal to Interface & Noise Ratio (SINR) or a Received Signal Strength Indicator (RSSI).

Each of the antenna tuners may include an aperture tuner for adjusting a frequency band corresponding to the antennas and an impedance tuner for performing impedance matching.

The at least one processor may be configured to execute the one or more instructions to, based on a failure to send the emergency call, control the antenna tuners to also set a frequency band corresponding to the antennas included in the remaining RRH modules to a frequency band determined according to transmission performance information of the remaining RRH modules.

Each of the plurality of RRH modules may include a radio frequency (RF) transceiver.

The RF transceiver may change RF signals received from the plurality of antennas into baseband signals, and may transmit the baseband signals to the communication processor.

An operation method of an electronic device for vehicles according to an embodiment may include obtaining performance information of each of the plurality of RRH modules during normal driving of a vehicle.

The operation method of an electronic device for vehicles according to an embodiment may include, when occurrence of an accident of the vehicle is detected, determining some RRH modules among the plurality of RRH modules, based on the performance information.

The operation method of an electronic device for vehicles according to an embodiment may include setting a frequency band corresponding to the antennas included in the some RRH modules to a frequency band determined according to transmission performance information of the some RRH modules.

The operation method of an electronic device for vehicles according to an embodiment may include setting a frequency band corresponding to the antennas included in the remaining RRH modules to a frequency band determined according to transmission performance information of the remaining RRH modules.

The operation method of an electronic device for vehicles according to an embodiment may include sending an emergency call by using the some RRH modules.

The operation method of an electronic device for vehicles according to an embodiment may include receiving a signal from an external device by using the remaining RRH modules.

The performance information of each of the plurality of RRH modules may include transmission signal quality information and reception signal quality information of the plurality of RRHs for each of the frequency bands.

The determining of the some RRH modules among the plurality of RRH modules may include determining priority information of the plurality of RRHs, based on the transmission signal quality information of the plurality of RRHs for each of the frequency bands.

The determining of the some RRH modules among the plurality of RRH modules may include determine the some RRH modules, based on the priority information.

The setting to the frequency band determined according to the transmission performance information of the some RRH modules may include setting a frequency band corresponding to the antennas included in the some RRH modules to a frequency band in which the transmission signal quality information of the some RRH modules is optimum.

The setting of the frequency band corresponding to the antennas included in the remaining RRH modules to the frequency band determined according to the reception performance information of the remaining RRH modules may include setting a frequency band corresponding to the antennas included in the remaining RRH modules to a frequency band in which the reception signal quality information of the remaining RRH modules is optimum.

A value representing the transmission signal quality may include a Voltage Standing Wave Ratio (VSWR).

A value representing the reception signal quality may include a Signal to Interface & Noise Ratio (SINR) or a Received Signal Strength Indicator (RSSI).

The operation method of the electronic device for vehicles according to an embodiment may further include performing impedence matching for the antennas.

The operation method of an electronic device for vehicles according to an embodiment may include, based on failure of the emergency call sending, also setting a frequency band corresponding to the antennas included in the remaining RRH modules to a frequency band determined according to transmission performance information of the remaining RRH modules.

An RRH structure including one communication processor 120 according to an embodiment and a plurality of RRH modules 110 disposed at various locations on a vehicle to be spaced apart from the communication processor, thereby reducing costs and also improving the communication stability of the vehicle.

The electronic device for vehicles according to an embodiment enables stable driving of the vehicle and ensures the safety of a driver and passengers, by performing stable communication.

The electronic device for vehicles according to an embodiment may improve communication performance in a situation where an emergency call must be sent, to thereby increase the probability of successful emergency call sending, so that the safety of drivers and passengers may be secured in the event of a vehicle accident.

The electronic device for vehicles according to an embodiment may include an antenna tuner used to tune an antenna according to a communication environment, thereby increasing the lifespan of the antenna.

An operation method of an electronic device for vehicles according to an embodiment may be embodied as program commands executable by various computer means and may be recorded on a computer-readable medium. The computer-readable medium may include program commands, data files, data structures, and the like separately or in combinations. The program commands to be recorded on the medium may be specially designed and configured for the present disclosure or may be well-known to and usable by one of ordinary skill in the art of computer software. Examples of a computer-readable recording medium include a magnetic medium such as a hard disk, a floppy disk, or a magnetic tape, an optical medium such as a compact disk-read-only memory (CD-ROM) or a digital versatile disk (DVD), a magneto-optical medium such as a floptical disk, and a hardware device specially configured to store and execute program commands such as a ROM, a random-access memory (RAM), or a flash memory. Examples of the program commands are high-level language codes that can be executed by a computer by using an interpreter or the like as well as machine language codes made by a compiler.

Also, electronic devices for vehicles and operation methods thereof according to disclosed embodiments may be provided in a computer program product. The computer program product, which is a commodity, may be traded between sellers and buyers.

The computer program product may include a software (S/W) program and a computer-readable storage medium having the S/W program stored thereon. For example, the computer program product may include a product in the form of a software program (e.g., a downloadable app) that is electronically distributed through the manufacturer of an electronic device or an electronic market (e.g., Google Play Store, AppStore). For electronic distribution, at least a portion of the S/W program may be stored on a storage medium or may be created temporarily. In this case, the storage medium may be a server of a manufacturer, a server of an electronic market, or a storage medium of a relay server for temporarily storing an SW program.

The computer program product may include, in a system including a server and a client device, a storage medium of the server or a storage medium of the client device. Alternatively, if there is a third device (e.g., a smartphone) in communication with the server or client device, the computer program product may include a storage medium of the third device. Alternatively, the computer program product may include the software program itself transmitted from the server to the client device or the third device, or transmitted from the third device to the client device.

In this case, one of the server, the client device, and the third device may execute the computer program product to perform the methods according to the disclosed embodiments. Alternatively, at least two of the server, the client device, and the third device may execute the computer program product to distribute and perform the methods according to the disclosed embodiments.

For example, a server (e.g., a cloud server or an artificial intelligence server) may execute a computer program product stored on a server to control a client device communicating with the server to perform the methods according to the disclosed embodiments.

While one or more embodiments of the present disclosure have been described with reference to the figures, it will be understood by those of ordinary skill in the art that various changes in form and details may be made therein without departing from the spirit and scope as defined by the following claims.

## Claims

1. An electronic device (100) for vehicles, comprising:
a communication processor (120);
a plurality of remote radio head (RRH) modules (110) connected to the communication processor (120), each of the plurality of RRH modules (110) including a plurality of antennas and antenna tuners for tuning the plurality of antennas;
a memory (140) storing one or more instructions; and
at least one processor (130) configured to execute the one or more instructions stored in the memory,
wherein the at least one processor (130) is configured to execute the one or more instructions to
obtain performance information of each of the plurality of RRH modules during normal driving of a vehicle,
when occurrence of an accident of the vehicle is detected, determine some RRH modules among the plurality of RRH modules, based on the performance information,
control the antenna tuners to set a frequency band corresponding to the antennas included in the some RRH modules to a frequency band determined according to transmission performance information of the some RRH modules and to set a frequency band corresponding to the antennas included in remaining RRH modules among the plurality of RRH modules to a frequency band determined according to reception performance information of the remaining RRH modules, and
control the communication processor to send an emergency call by using the some RRH modules.

2. The electronic device (100) of claim 1, wherein
the at least one processor (130) is configured to execute the one or more instructions to control the communication processor to receive a signal from an external device by using the remaining RRH modules.

3. The electronic device (100) of claim 1 or 2, wherein
the performance information of each of the plurality of RRH modules includes transmission signal quality information and reception signal quality information of the plurality of RRHs for each of the frequency bands.

4. The electronic device (100) of claim 3, wherein
the at least one processor (130) is configured to execute the one or more instructions to determine priority information of the plurality of RRHs, based on the transmission signal quality information of the plurality of RRHs for each of the frequency bands, and determine the some RRH modules, based on the priority information.

5. The electronic device (100) of claim 4, wherein
the at least one processor (130) is configured to execute the one or more instructions to control the antenna tuners to set a frequency band corresponding to the antennas included in the some RRH modules to a frequency band in which the transmission signal quality information of the some RRH modules is optimum.

6. The electronic device (100) of claim 5, wherein
the at least one processor (130) is configured to execute the one or more instructions to control the antenna tuners to set a frequency band corresponding to the antennas included in the remaining RRH modules to a frequency band in which the reception signal quality information of the remaining RRH modules is optimum.

7. The electronic device (100) of any one of claims 3 through 6, wherein
a value representing the transmission signal quality includes a Voltage Standing Wave Ratio (VSWR), and
a value representing the reception signal quality includes a Signal to Interface & Noise Ratio (SINR) or a Received Signal Strength Indicator (RSSI).

8. The electronic device (100) of any one of claims 1 through 7, wherein each of the antenna tuners includes an aperture tuner for adjusting a frequency band corresponding to the antennas and an impedance tuner for performing impedance matching.

9. The electronic device (100) of any one of claims 1 through 8, wherein the at least one processor (130) is configured to execute the one or more instructions to, based on a failure to send the emergency call, control the antenna tuners to also set a frequency band corresponding to the antennas included in the remaining RRH modules to a frequency band determined according to transmission performance information of the remaining RRH modules.

10. The electronic device (100) of any one of claims 1 through 9, wherein
each of the plurality of RRH modules includes a radio frequency (RF) transceiver, and
the RF transceiver changes RF signals received from the plurality of antennas into baseband signals and transmits the baseband signals to the communication processor.

11. An operation method of an electronic device for vehicles, the operation method comprising:
obtaining performance information of each of a plurality of RRH modules during normal driving of a vehicle;
when occurrence of an accident of the vehicle is detected, determining some RRH modules among the plurality of RRH modules, based on the performance information;
setting a frequency band corresponding to the antennas included in the some RRH modules to a frequency band determined according to transmission performance information of the some RRH modules;
setting a frequency band corresponding to the antennas included in remaining RRH modules among the plurality of RRH modules to a frequency band determined according to reception performance information of the remaining RRH modules; and
sending an emergency call by using the some RRH modules.

12. The operation method of claim 11, further comprising
receiving a signal from an external device by using the remaining RRH modules.

13. The operation method of claim 11 or 12, wherein
the performance information of each of the plurality of RRH modules includes transmission signal quality information and reception signal quality information of the plurality of RRHs for each of the frequency bands.

14. The operation method of claim 13, wherein
the determining of some RRH modules among the plurality of RRH modules comprises:
determining priority information of the plurality of RRHs, based on the transmission signal quality information of the plurality of RRHs for each of the frequency bands; and
determining the some RRH modules, based on the priority information.

15. One or more computer-readable recording mediums having recorded
thereon a program for performing the method of any one of claims 11 through 14.
